# EUROPEAN PATENT SPECIFICATION

(11) **EP 3 088 256 B1**
(45) Date of publication and mention of the grant of the patent: **15.11.2017**
(21) Application number: 15165934.9
(22) Date of filing: 30.04.2015
(51) Int. Cl.: B60R 16/02, B60R 16/023, H01R 13/506, H02G 3/08

(54) **BUSBAR FIXATION SYSTEM**
STROMSCHIENENFIXIERUNGSSYSTEM
SYSTÈME DE FIXATION DE BARRES CONDUCTRICES

(43) Date of publication of application: 02.11.2016
(73) Proprietor: Delphi Technologies, Inc., Troy MI 48007 (US)
(72) Inventor: Kowalewski, Michal Miroslaw, 30-606 Kraków (PL); Kloch, Konrad Tadeusz, 31-416 Kraków (PL)
(74) Representative: Delphi France SAS

(56) References cited:
- DE-A1-102009 032 971

## Description

### 1. Field of the invention

The present invention refers to a fixation system for fixing a busbar, and in particular to a fixation system for fixing a busbar to an electrical center of a vehicle.

### 2. Technical background

Automotive electrical distribution centers, or electrical centers of vehicles, generally provide electrical connection of electrical elements such as relays, fuses or the like. Electrical centers may also provide for electrical bussing, for example in a single block, and require a distribution of a common voltage, which is typically supplied by a vehicle battery. It is known to provide electrical centers with a busbar for distributing the common voltage.

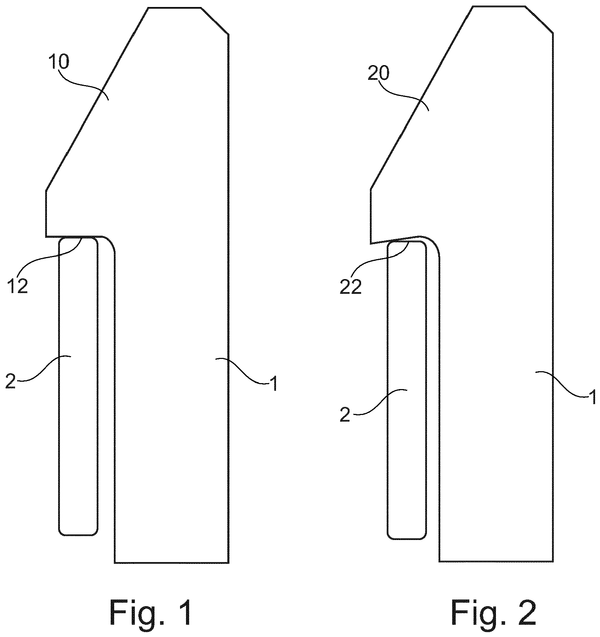

One important aspect, which comes along with the utilization of busbars, is the proper fixation and positioning thereof. Common fixation systems make use of snap hooks for keeping busbars in place and for preventing their disassembly. Thereby several such snap hooks are typically utilized for providing proper positioning of the busbar. Figs. 1 and 2 show two reference snap hook designs not in accordance with the invention: One design with a flat surface (Fig. 1) and one with an angled surface (Fig. 2).

In general, the flat surface snap hook design of Fig. 1 features a beam or arm 1 and a snap hook 10. The busbar 2, shown in lateral cross section, is in blocking contact with the flat surface 12 of the snap hook 10, thereby being hindered from removal along a lateral direction of the busbar (i.e. along an upward direction in Fig. 1). By providing such snap hooks around the busbar 2, a firm grip of the busbar can be provided. However, this flat surface snap hook design has the disadvantage that the busbar 2 can easily slip out of the fixation system when the snap hook bends slightly into an undesired direction (i.e. to the right side in Fig. 1).

Thus the angled surface snap hook design as illustrated in Fig. 2 was developed for taking bending into account. It differs from the flat surface snap hook design of Fig. 1 in that the surface 22 of the hook 20 is not perpendicular to the longitudinal direction of the arm 10. This negative angle version is designed such that when the hook bends slightly in an undesired direction (i.e. to the right side in Fig. 2), a releasing of the busbar 2 is still prevented. However, also this angled surface snap hook design has the disadvantage that the busbar 2 can be released when higher retention forces are applied. Furthermore, since the contact point between the busbar 2 and the hook 20 is far from the beam or arm 1, it is less stiff compared to the flat surface snap hook design of Fig. 1, in particular due to the longer lever of the force (i.e. bigger torque).

It is thus an object of the present invention to provide a fixation system which overcomes the above outlined disadvantages at least partially. It is in particular an object of the present invention to provide a fixation system which can withstand high retention forces.

These and other objects, which will become apparent upon reading the following description, are solved by a fixation system according to independent claim 1**.**

### 3. Summary of the invention

The present invention relates to a fixation system for fixing a busbar, and in particular for fixing a busbar to an electrical center of a vehicle. It will be appreciated that the busbar can be any common busbar, and may be adapted for receiving and transporting electric currents. Preferably the busbar is of a platelike structure, and can for example be a stamped plate of an electrically conductive material. Further on, the electric center is not limited to any particular structure, and can refer to any electrical component of e.g. a vehicle. The electrical center may thereby be a fuse relay box, for example.

The fixation system comprises an arm. The arm thereby has preferably a longitudinal extent and can also be present in form of a beam or a bar. Further on, there is provided a hook on said arm. The hook can in general be of any form, but comprises a retention groove with an essentially U-shaped cross section. The hook and arm may be referred to a clip, which may be provided on the electric center. The total length of the clip may depend on the used materials and the size of the busbar. The clip may for example be 12 mm long.

Furthermore, the fixation system comprises a busbar which is arranged at least partially within said retention groove of the hook. In a particularly preferred embodiment the busbar is aligned parallel to the longitudinal dimension of the arm. Preferably an edge of the busbar is arranged in said retention groove. The thickness of the busbar may for example be in the range of 0.6 to 1.2 mm, and may preferably be of 0.8 mm.

Accordingly, due to the at least partial arrangement of the busbar within the retention groove, the busbar is efficiently hindered from slipping away from the hook. Further, larger retention force, which may act onto the busbar driving it into the direction of the retention groove, can be absorbed without the busbar slipping out of the hook and without damaging the hook. An accidental disassembling of the busbar from the fixation system is thus advantageously prevented. Preferably, the busbar can only be disassembled by bending the hook with a tool or by destroying the material, thus a strong fixation of the busbar is provided.

In a particularly preferred embodiment, the fixation system is adapted to withstand retention forces of at least 60 N, more preferably of at least 70 N, further preferably of at least 80 N and most preferably of at least 82 N. The retention forces may thereby act on the busbar for urging it further into the retention groove. It will thereby be appreciated that retention forces may act mainly in a lateral direction of the busbar. Accordingly, a strong fixation of the busbar is provided.

Preferably, the hook is an integral part of the arm. Thus, only minimal internal tensions arise within the arm/hook system when retention forces are applied. Preferably, the arm and/or the hook comprise a plastic material.

In a preferred embodiment, the essentially U-shaped cross section of the retention groove of the hook is defined by an outer leg, an inner leg and a base. Thus, the busbar is arranged at least partially within a space spanned by the outer leg, the inner leg and the base. Preferably the retention groove is shaped such that it can hinder a movement of the busbar into at least three main directions.

Further preferred, the outer leg is an integral part of the arm. Thus, the arm may essentially form the outer leg of the essentially U-shaped cross section of the retention groove of the hook. Thereby the stability of the fixation system is increased.

Further preferred, the base comprises an essentially flat surface. It will be appreciated that an entirely flat surface is most desired. However, due to variations in manufacturing processes, such completely flat surfaces may not be obtainable. Preferably, the essentially flat surface has a width of 0.2-10 mm, more preferably of 0.4-5 mm, furthermore preferred of 0.6-2 mm and most preferred of 1.0 to 1.4 mm. It will be appreciated that the width of the essentially flat surface is such that it can receive the busbar, and in particular an edge of the busbar. In a particularly preferred embodiment the width of the essentially flat surface is at least large enough for receiving the busbar having a defined thickness. Accordingly, if the thickness of the busbar is for example 1 mm, then the width of the essentially flat surface may be for example 1.2 mm.

In a further preferred embodiment, the essentially flat surface is perpendicular to a longitudinal direction of the arm and/or perpendicular to a lateral direction of the busbar. Thus, forces acting onto the busbar are efficiently transferred to the hook/arm system, and the contact point of the busbar is preferably close to the arm, so that the stiffness of the fixation system is increased. Preferably the edge or side of the busbar is planar and in plane contact with the essentially flat surface of the hook.

Further preferred, the busbar is in retention contact with the base of the essentially U-shaped cross section of the retention groove. The term retention contact thereby describes that the busbar is in contact with said base, and that said contact facilitates the retention of the busbar, such that the busbar is properly held in place, especially when retention forces are applied onto the busbar. Thereby any lateral forces acting on the busbar are efficiently transferred to the hook and the arm of the fixation system, thereby increasing the fixation of the busbar.

Preferably, the essentially U-shaped cross section of the retention groove has a discontinuous or rectangular corner formed between the base and the outer leg. Thus, a transition from the base to the outer leg is not smooth, but rather abrupt, step-like, discontinuous or rectangular. Thus, when retention forces are applied, slipping of the busbar out of the retention groove is prevented, as the busbar is preferably captured in the discontinuous or rectangular corner.

Further preferred, the essentially U-shaped cross section of the retention groove has a smooth or round corner formed between the base and the inner leg. Thus, when retention forces are applied, these forces are efficiently transferred from the busbar via the hook to the arm, without inducing any cracks or flaws between the hook and the arm. Accordingly, the fixation system is very durable and can withstand high retention forces.

Preferably, the outer leg has a height of 0.05-5 mm, further preferred of 0.08-1 mm, more preferably of 0.1-0.5 mm and most preferably of 0.15-0.25 mm. The height may be measured along the lateral direction of the busbar, or along the longitudinal direction of the arm. Preferably, the outer leg has a width of 0.1-5 mm, further preferred of 0.15-2 mm, more preferably of 0.2 to 1 mm and most preferably of 0.2-0.5 mm. Particularly preferred, the width of the outer leg is at least 0.25 mm. The width may be measured perpendicular to the height of the outer leg, and may preferably be measured along a surface normal direction of the busbar.

In another preferred embodiment, the retention groove is adapted to be in blocking contact with the busbar when the arm is flexed, so as to hinder further flexing of the arm. In a particularly preferred embodiment, the busbar is thereby in blocking contact with the outer leg of the essentially U-shaped cross section of the retention groove. Thereby, an accidental disassembling of the busbar is prevented.

The retention groove may preferably be produced by an undercut process. Thereby, for example, a hook with an angled surface as known in the art, for example with angle of 5-8°, may be provided. The angled surface may then be undercut, such that a tip or protrusion, i.e. the outer leg, is formed. The height of the tip is then defined by the angle and total length of the initial angled surface.

It will be appreciated that the fixation system may comprise more than one clips for positioning the busbar. Furthermore the present invention further relates to a clip for fixing a busbar, in particular for fixing a busbar in an electrical center. The clip may comprise an arm and hook as detailed above. The present invention furthermore relates to an electrical center, in particular of a vehicle, which comprises a busbar and at least one clip for fixing the busbar. The clip may comprise an arm and hook as detailed above.

### 4. Description of preferred embodiments

In the following, the invention will be described in detail with reference to the drawings in which:
Figs. 1 and 2 illustrate reference fixation systems;
Fig. 3 illustrates a fixation system according to one embodiment of the present invention;
Fig. 4 illustrates the fixation system of Fig. 3 in another configuration, and
Fig. 5 illustrates results of a finite element analysis study.

Figs. 1 and 2 show reference fixation systems, designed with a flat surface 11 and negative angled surface 21, respectively, as outlined above.

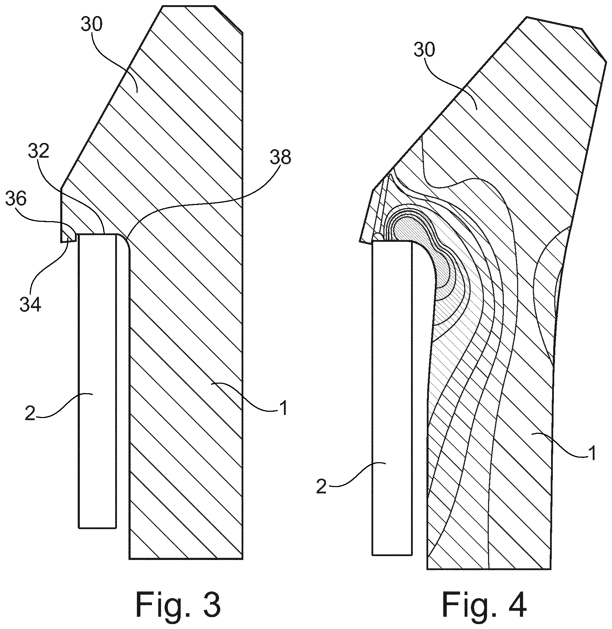

Fig. 3 illustrates a fixation system according to one embodiment of the present invention. The fixation system comprises an arm 1 with a hook 30 provided thereon. The hook 30 comprises a flat surface or base 32, which is in blocking contact with a busbar 2. The flat surface or base 32 is perpendicular to a longitudinal direction of the arm 1, and also perpendicular to the busbar 2. The edge of the busbar 2 is plane and in planar contact with the flat surface or base 32 of the hook 30. The width of the flat surface or base 32 is slightly larger than the thickness of the busbar 2. Therefore, the contact point between the busbar 2 and hook 30 is close to the arm 1, so that the clip features high stiffness.

Further on, there is provided an outer leg or protrusion 34, and the flat surface 32 is located between the protrusion 34 and the arm 1. Thus, the protrusion 34, the flat surface 32 and the arm 1 form an essentially U-shaped cross section, in which the busbar 2 is at least partially placed. The arm 1 forms the inner leg of the U-shaped groove, the protrusion 34 forms the outer leg and the flat surface 32 forms the base. The surface of the protrusion 34 is angled, since the illustrated embodiment was prepared from an negative angled surface as shown in Fig. 2. The negative angle surface was undercut, whereby the protrusion 34 and flat surface 32 were formed.

The transition 36 between the flat surface 32 and the protrusion 24 is steplike, i.e. a corner 36 is formed. Accordingly, when retention forces act on the busbar, the edge of the busbar is trapped in this corner 36. Further, the transition 38 between the flat surface 32 and the arm 1 is smooth, i.e. rounded. Thus, the system is very resilient.

Fig. 4 exemplarily presents the behavior of the fixation system of Fig. 3 when retention forces are applied. The retention forces may be applied onto the busbar 2 urging it against the flat surface 32 of the hook 30 (i.e. upwards in Fig. 4). As can clearly be seen, the busbar 2 is hindered from slipping out of the hook 30, as the edge of the busbar 2 is retained in the corner 36. Even under high retention forces, the forces are efficiently absorbed by the hook 30 and arm 1, whereby in particular the round transition 38 is able to withstand high strains without breaking.

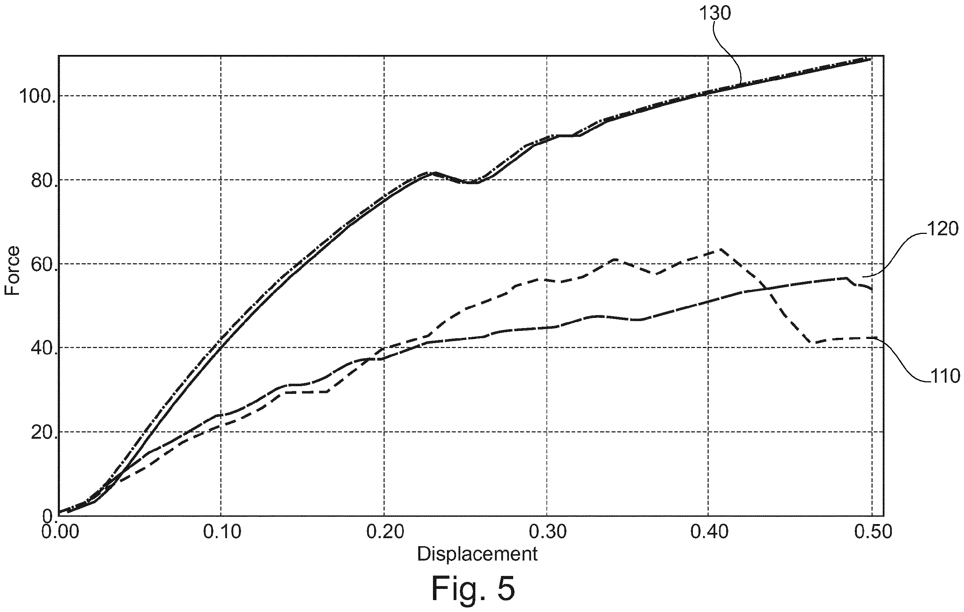

Fig. 5 illustrates results of a finite element analysis study, which was carried out for both reference designs of Figs. 1 and 2 as well as for the inventive design of Fig. 3**.** The illustrated diagram of Fig. 5 presents the retention force on the ordinate vs. the displacement of the busbar on the abscissa. The results for the flat surface reference hook design of Fig. 1 is labelled 110, while the results of the angled surface reference hook design of Fig. 2 is labelled 120. The result of the design according to the embodiment of the present invention as described with reference to Fig. 3 is labelled 130.

It is clearly recognizable from the presented diagram of Fig. 5 that the inventive design can withstand highest retention forces. The flat and angled surface designs were slipping off at forces of around 55 N and 60 N, respectively. In comparison, the inventive fixation system could well withstand forces of 82 N, which is an improvement of 49 % and 36 %, respectively, compared to the reference designs of Figs. 1 and 2.

### Reference chart:

- 1: arm (inner leg)
- 2: busbar
- 10, 20, 30: hook
- 12, 32: flat surface (base)
- 22: angled surface
- 34: protrusion (outer leg)
- 36: cornered transition
- 38: round transition

## Claims

1. Fixation system for fixing a busbar (2), and in particular for fixing a busbar (2) to an electrical center of a vehicle, comprising:
an arm (1);
a hook (30) provided on said arm (1), wherein said hook (30) comprises a retention groove with an essentially U-shaped cross section, and
a busbar (2) arranged at least partially within said retention groove.

2. Fixation system of claims 1, wherein the hook (30) is an integral part of the arm (1).

3. Fixation system of claim 1 or 2, wherein the arm (1) and/or the hook (30) comprises a plastic material.

4. Fixation system of any one of claims 1-3, wherein the essentially U-shaped cross section of the retention groove of the hook (30) is defined by an outer leg (34), an inner leg (1) and a base (32).

5. Fixation system of claim 4, wherein the outer leg (1) is an integral part of the arm (1) and is attached to a structure, in particular to a structure of a vehicle.

6. Fixation system of claim 4 or 5, wherein the base (32) comprises an essentially flat surface (32).

7. Fixation system of claim 6, wherein the essentially flat surface (32) has a width of 0.2 to 10 mm, preferably of 0.4 to 5 mm, more preferably of 0.6 to 2 mm and most preferably of 1.0 to 1.4 mm.

8. Fixation system of claim 6 or 7, wherein the essentially flat surface (32) is perpendicular to a longitudinal direction of the arm (1) and/or a lateral direction of the busbar (2).

9. Fixation system of any one of claims 4-8, wherein the busbar (2) is in retention contact with the base (32).

10. Fixation system of any one of claims 4-9, wherein the essentially U-shaped cross section of the retention groove has a discontinuous or rectangular corner (36) formed between the base (32) and the outer leg (34).

11. Fixation system of any one of claims 4-10, wherein the essentially U-shaped cross section of the retention groove has a smooth or round corner (38) formed between the base (32) and the inner leg (1).

12. Fixation system of any one of claims 4-11, wherein the outer leg (34) has a height of 0.05 to 2 mm, preferably of 0.08 to 1 mm, more preferably of 0.1 to 0.5 mm and most preferably of 0.15 to 0.25 mm.

13. Fixation system of any one of claims 4-12, wherein the outer leg (34) has a width of 0.1 to 5 mm, preferably of 0.15 to 2 mm, more preferably of 0.2 to 1 mm and most preferably of 0.2 to 0.3 mm.

14. Fixation system of any one of claims 1-13, wherein the retention groove is adapted to be in blocking contact with the busbar (2) when the arm (1) is flexed so as to hinder further flexing of the arm (1).

15. Fixation system of any one of claims 1-14, wherein the fixation system is adapted to withstand retention forces, which are urging the busbar (2) further into the retention groove, of at least 60 N, preferably of at least 70 N, more preferably of at least 80 N, and most preferably of at least 82 N.

## Patentansprüche

1. Befestigungssystem zur Befestigung einer Sammelschiene (2) und insbesondere zur Befestigung einer Sammelschiene (2) an einem elektrischen Zentrum eines Fahrzeugs, das aufweist:
einen Arm (1);
einen an dem Arm (1) vorgesehenen Haken (30), wobei der Haken (30) eine Halterille mit einem im Wesentlichen U-förmigen Querschnitt aufweist, und
eine Sammelschiene (2), die zumindest teilweise in der Halterille angeordnet ist.

2. Befestigungssystem gemäß Anspruch 1, wobei der Haken (30) ein integraler Teil des Arms (1) ist.

3. Befestigungssystem gemäß Anspruch 1 oder 2, wobei der Arm (1) und/oder der Haken (30) ein Kunststoffmaterial aufweist.

4. Befestigungssystem gemäß einem der Ansprüche 1 bis 3, wobei der im Wesentliche U-förmige Querschnitt der Halterille des Hakens (30) durch einen äußeren Schenkel (34), einen inneren Schenkel (1) und eine Basis (32) definiert ist.

5. Befestigungssystem gemäß Anspruch 4, wobei der äußere Schenkel (1) ein integraler Teil des Arms (1) ist und an einer Struktur, insbesondere an einer Struktur eines Fahrzeugs, befestigt ist.

6. Befestigungssystem gemäß Anspruch 4 oder 5, wobei die Basis (32) eine im Wesentlichen ebene Oberfläche (32) aufweist.

7. Befestigungssystem gemäß Anspruch 6, wobei die im Wesentlichen ebene Oberfläche (32) eine Breite von 0,2 bis 10 mm, vorzugsweise von 0,4 bis 5 mm, bevorzugter von 0,6 bis 2 mm und am meisten bevorzugt von 1,0 bis 1,4 mm hat.

8. Befestigungssystem gemäß Anspruch 6 oder 7, wobei die im Wesentlichen ebene Oberfläche (32) senkrecht zu einer Längsrichtung des Arms (1) und/oder einer Querrichtung der Sammelschiene (2) ist.

9. Befestigungssystem gemäß einem der Ansprüche 4-8, wobei die Sammelschiene (2) in Haltekontakt mit der Basis (32) ist.

10. Befestigungssystem gemäß einem der Ansprüche 4-9, wobei der im Wesentliche U-förmige Querschnitt der Halterille eine diskontinuierliche oder rechteckige Ecke (36) hat, die zwischen der Basis (32) und dem äußeren Schenkel (34) ausgebildet ist.

11. Befestigungssystem gemäß einem der Ansprüche 4-10, wobei der im Wesentliche U-förmige Querschnitt der Halterille eine glatte oder runde Ecke (38) hat, die zwischen der Basis (32) und dem inneren Schenkel (1) ausgebildet ist.

12. Befestigungssystem gemäß einem der Ansprüche 4-11, wobei der äußere Schenkel (34) eine Höhe von 0,05 bis 2 mm, vorzugsweise von 0,08 bis 1 mm, bevorzugter von 0,1 bis 0,5 mm und am meisten bevorzugt von 0,15 bis 0,25 mm hat.

13. Befestigungssystem gemäß einem der Ansprüche 4-12, wobei der äußere Schenkel (34) eine Breite von 0,1 bis 5 mm, vorzugsweise von 0,15 bis 2 mm, bevorzugter von 0,2 bis 1 mm und am meisten bevorzugt von 0,2 bis 0,3 mm hat.

14. Befestigungssystem gemäß einem der Ansprüche 1-13, wobei die Halterille ausgebildet ist, in einem blockierenden Kontakt mit der Sammelschiene (2) zu sein, wenn der Arm (1) gebogen ist, um ein weiteres Biegen des Arms (1) zu verhindern.

15. Befestigungssystem gemäß einem der Ansprüche 1-14, wobei das Befestigungssystem ausgebildet ist, um Haltekräften, die die Sammelschiene (2) weiter in die Halterille drängen, von mindestens 60 N, vorzugsweise von mindestens 70 N, bevorzugter von mindestens 80 N und am meisten bevorzugt von mindestens 82 N zu widerstehen.

## Revendications

1. Système de fixation pour fixer une barre de bus (2), et en particulier pour fixer une barre de bus (2) sur un centre électrique d'un véhicule, comprenant :
un bras (1) ;
un crochet (30) prévu sur ledit bras (1), dans lequel ledit crochet (30) comprend une rainure de rétention avec une section transversale essentiellement en forme de U, et
une barre de bus (2) agencée au moins partiellement à l'intérieur de ladite rainure de rétention.

2. Système de fixation selon la revendication 1, dans lequel le crochet (30) fait partie intégrante du bras (1).

3. Système de fixation selon la revendication 1 ou 2, dans lequel le bras (1) et/ou le crochet (30) comprennent une matière plastique.

4. Système de fixation selon l'une des revendications 1 à 3, dans lequel la section transversale essentiellement en forme de U de la rainure de rétention du crochet (30) est définie par une branche extérieure (34), une branche intérieure (1) et une base (32).

5. Système de fixation selon la revendication 4, dans lequel la branche extérieure (1) fait partie intégrante du bras (1) et est attachée à une structure, en particulier à une structure d'un véhicule.

6. Système de fixation selon la revendication 4 ou 5, dans lequel la base (32) comprend une surface essentiellement plane (32).

7. Système de fixation selon la revendication 6, dans lequel la surface essentiellement plane (32) a une largeur de 0,2 à 10 mm, de préférence de 0,4 à 5 mm, de façon plus préférée de 0,6 à 2 mm, et de la façon la plus préférée de 1,0 à 1,4 mm.

8. Système de fixation selon la revendication 6 ou 7, dans lequel la surface essentiellement plane (32) est perpendiculaire à une direction longitudinale du bras (1) et/ou à une direction latérale de la barre de bus (2).

9. Système de fixation selon l'une quelconque des revendications 4 à 8, dans lequel la barre de bus (2) est en contact de rétention avec la base (32).

10. Système de fixation selon l'une quelconque des revendications 4 à 9, dans lequel la section transversale essentiellement en forme de U de la rainure de rétention présente un coin discontinu ou rectangulaire (36) formé entre la base (32) et la branche extérieure (34).

11. Système de fixation selon l'une quelconque des revendications 4 à 10, dans lequel la section transversale essentiellement en forme de U de la rainure de rétention présente un coin en douceur ou arrondi (38) formé entre la base (32) et la branche intérieure (1).

12. Système de fixation selon l'une quelconque des revendications 4 à 11, dans lequel la branche extérieure (34) a une hauteur de 0,05 à 2 mm, de préférence de 0,08 à 1 mm, de façon plus préférée de 0,1 à 0,5 mm, et de la manière la plus préférée de 0,15 à 0,25 mm.

13. Système de fixation selon l'une quelconque des revendications 4 à 12, dans lequel la branche extérieure (34) a une largeur de 0,1 à 5 mm, de préférence de 0,15 à 2 mm, de façon plus préférée de 0,2 à 1 mm et de la manière la plus préférée, de 0,2 à 0,3 mm.

14. Système de fixation selon l'une quelconque des revendications 1 à 13, dans lequel la rainure de rétention est adaptée pour être en contact de blocage avec la barre de bus (2) quand le bras (1) est fléchi de manière à entraver une poursuite de la flexion du bras (1).

15. Système de fixation selon l'une quelconque des revendications 1 à 14, dans lequel le système de fixation est adapté pour résister à des forces de rétention, qui forcent la barre de bus (2) plus loin à l'intérieur de la rainure de rétention, d'au moins 60 N de préférence au moins 70 N, de façon plus préférée d'au moins 80 N, et de la manière la plus préférée d'au moins 82 N.
